# EUROPÄISCHE PATENTSCHRIFT

(11) **EP 0 988 189 B1**
(45) Veröffentlichungstag und Bekanntmachung des Hinweises auf die Patenterteilung: **02.10.2002**
(21) Anmeldenummer: 98934747.1
(22) Anmeldetag: 19.05.1998
(51) Int. Cl.: B60S 1/08

(54) **VORRICHTUNG ZUM ERFASSEN EINER BENETZUNG EINER SCHEIBE**
DEVICE FOR DETECTING MOISTENING OF A WINDOW
DISPOSITIF POUR DETECTER LE MOUILLAGE D'UN VITRE

(30) Priorität: 06.06.1997 DE 19723859
(43) Veröffentlichungstag der Anmeldung: 29.03.2000
(73) Patentinhaber: ROBERT BOSCH GMBH, 70442 Stuttgart (DE)
(72) Erfinder: LAMM, Hubert, D-77876 Kappelrodeck (DE); MEIER, Hans, D-77833 Ottersweier (DE); HERMANN, Wolfgang, D-85354 Freising (DE); BLITZKE, Henry, D-77815 Buehl (DE); HADERER, Guenter, D-77815 Buehl (DE)
(86) Internationale Anmeldenummer: DE9801374
(87) Internationale Veröffentlichungsnummer: WO98055347

(56) Entgegenhaltungen:
- WO-A-94/27262
- DE-C- 19 603 553
- DE-C- 19 621 627
- US-A- 4 737 629

## Beschreibung

### Stand der Technik

Die Erfindung geht aus von einer Vorrichtung nach dem Oberbegriff des Hauptanspruchs, wie sie aus der DE 196 03 553 C1 bekanntgeworden ist.

In einer älteren Patentanmeldung (Aktenzeichen 196 21 627) ist eine Vorrichtung beschrieben, die einen optischen Regensensor und eine Auswerteeinrichtung aufweist. Der Regensensor erfaßt die Benetzung einer Scheibe mittels eines lichtabstrahlenden Senders und eines auf das abgestrahlte Licht ansprechenden Empfängers, der ein Sensorsignal an die Auswerteeinrichtung abgibt. In dem optischen Strahlengang befindet sich die Scheibe als Meßstrecke des Regensensors.

Eine Meßschaltung im Regensensor weist einen Kondensator als Integrationsstufe zum Erfassen der auf den Empfänger fallenden Lichtmenge und eine Komparatorstufe auf, die ein Auslösesignal an die Auswerteeinrichtung abgibt, wenn die ab einem bestimmten Zeitpunkt integrierte Lichtmenge innerhalb eines Zeitintervalls eine vorgegebene Schwelle überschreitet. Dabei wird die aus dem Licht des Senders und eventuellem Fremdlicht bestehende Gesamtlichtmenge und die bei abgeschaltetem Sender erfaßte Fremdlichtmenge in gesonderten Zeitintervallen gemessen. Die Auswerteeinrichtung weist einen Zeitgeber auf, der einen Zählwert erzeugt, der der Integrationszeit bis zum Eintreffen des Auslösesignals der Komparatorstufe entspricht.

Während eines ersten Zeitintervalls für die Gesamtlichtmessung ist der Sender des Regensensors eingeschaltet und strahlt Licht über die Scheibe als Meßstrecke auf den Empfänger ab. Dabei gelangt ebenfalls Fremdlicht aus der Umgebung auf den Empfänger. Aus der Integrationszeit wird ein Wert für die Gesamtlichtmenge abgeleitet. In dem zweiten Zeitintervall für die Fremdlichtmessung wird der Sender des Regensensors abgeschaltet, so daß lediglich Fremdlicht auf den Empfänger gelangen kann. Aus dieser zweiten Integrationszeit wird ein Wert für die Fremdlichtmenge abgeleitet.

Aus der Differenz zwischen Gesamtlichtmenge und Fremdlichtmenge wird eine Nutzlichtmenge ermittelt, die der Benetzung der Scheibe entspricht. In Abhängigkeit der Nutzlichtmenge wird beispielsweise eine automatische Kraftfahrzeug-Scheibenwischanlage angesteuert.

Nachteilig ist hierbei, daß eine erneute Fremdlichtmessung lediglich bei einer Änderung der Gesamtlichtmenge durchgeführt wird und daher eine Änderung der Fremdlichtmenge bei gleichbleibender Gesamtlichtmenge nicht erkannt wird.

Nachteilig ist weiterhin, daß bei häufigen Änderungen der Gesamtlichtmenge, wie z.B. bei einer Fahrt auf einer schattenreichen Straße oder einer Tunnelfahrt, die Fremdlichtmessung ebenfalls häufiger durchgeführt wird und die dabei entstehenden unregelmäßigen Ein- und Ausschaltzeiten einer Senderdiode eine unerwünschte unregelmäßige Schwankung der Strahlungsleistung des Senders bewirkt.

Besonders nachteilig hierbei ist, daß die Fremdlichtmenge lediglich in Verbindung mit der Gesamtlichtmenge ausgewertet und eine separate Fremdlichtauswertung nicht durchgeführt wird. Eine Tag-Nacht-Erkennung ist hier nicht vorgesehen.

Es sind außerdem Regensensoren am Markt bekannt, die zusätzlich zu dem Sender und dem Empfänger zum Erfassen der Scheibenbenetzung eine Fotozelle zur Tag-Nacht-Erkennung zur Steuerung der Auslöseempfindlichkeit des Regensensors aufweisen. Die Fotozelle als zusätzliches Bauelement des Regensensors verteuert jedoch die Herstellung des Sensors.

### Vorteile der Erfindung

Die erfindungsgemäße Vorrichtung mit den Merkmalen des Hauptanspruchs hat den Vorteil, daß das Fremdlicht erfaßt und hinsichtlich einer Tag-Nacht-Erkennung ausgewertet wird. Hierbei wird nach einer vorgegebenen Anzahl von Fremdlichtmessungen während eines kurzen Zeitintervalls eine Fremdlichtmessung über ein längeres Zeitintervall oder mit einer kleineren Schwelle für die genaue Erfassung von geringen Fremdlichtmengen durchgeführt.

Besonders vorteilhaft ist hierbei, daß der Regensensor lediglich einen Empfänger aufweist, der das Senderlicht für die Scheibenbenetzung und das Fremdlicht für die Tag-Nacht-Erkennung erfaßt.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist, daß die Vorrichtung zur Ansteuerung einer Scheibenwischanlage und weiterer Einrichtungen verwendbar ist. In Abhängigkeit der Scheibenbenetzung und/oder der Tag-Nacht-Erkennung werden beispielsweise Scheibenwischer angesteuert, Scheinwerfer ein- und ausgeschaltet oder ein Schiebedach betätigt.

Vorteilhaft ist weiterhin, daß in Abhängigkeit der Fremdlichtmenge die Empfindlichkeit oder die Schaltschwelle des Regensensors oder die Verstärkung des Sensorsignales einstellbar ist.

### Zeichnung

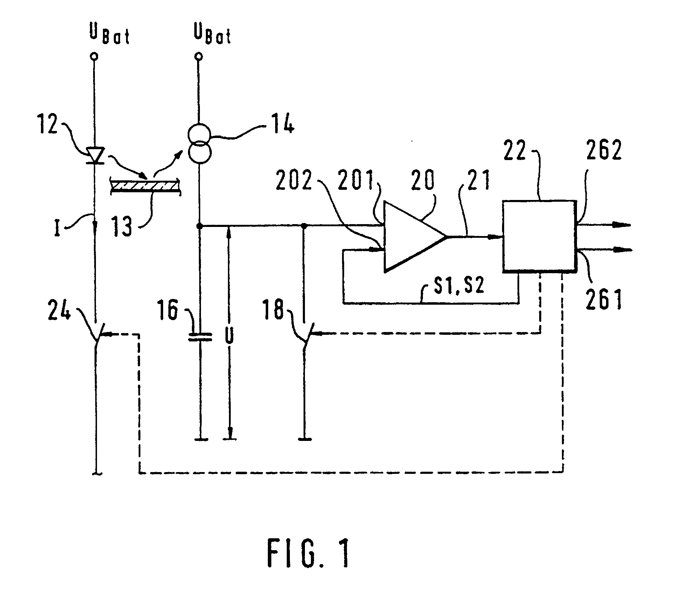

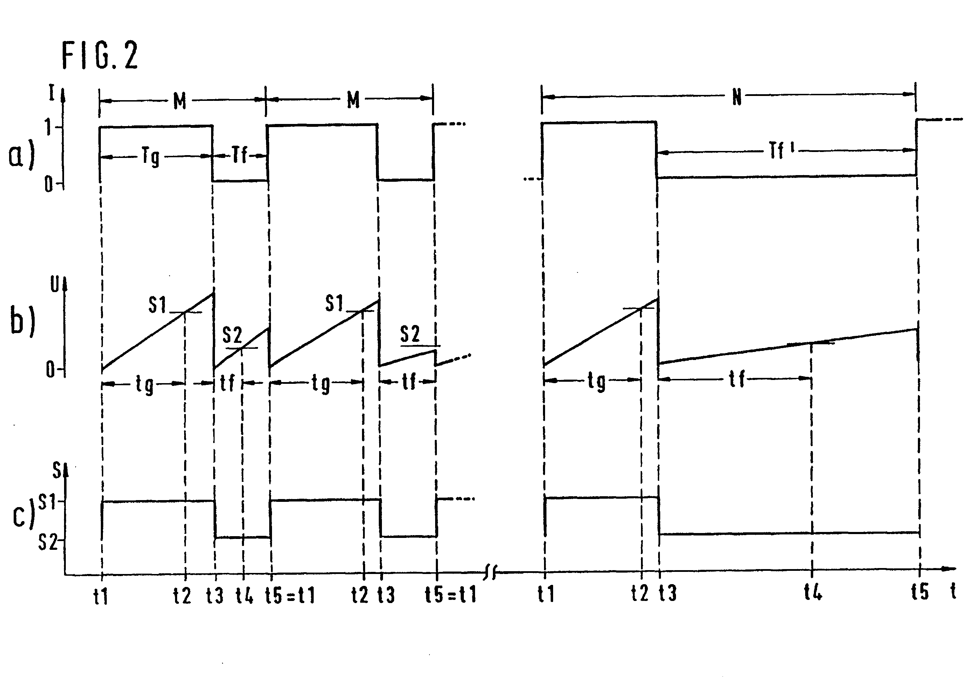

Ausführungsbeispiele der Erfindung sind in der Zeichnung dargestellt und in der nachfolgenden Beschreibung näher erläutert. Es zeigen Figur 1 ein Blockschaltbild der Regensensorvorrichtung, Figur 2a den Signalverlauf eines Senderstromes,
Figur 2b den Signalverlauf einer integrierten Lichtmenge und Figur 2c die jeweils angelegten Schwellen, aufgetragen über die Zeit.

### Beschreibung der Ausführungsbeispiele

Figur 1 zeigt ein Blockschaltbild der Regensensorvorrichtung. Eine Diode als Sender 12 wird in einem Senderstromkreis von einer Batteriespannung U_{Bat} versorgt. Ein Schalter 24 im Senderstromkreis schaltet einen Senderstrom I. Abgestrahltes Licht des Senders 12 wird über eine optische Meßstrecke 13, z.B. eine Kraftfahrzeugscheibe, auf einen Empfänger 14 geleitet. Der ebenfalls mit der Batteriespannung U_{Bat} betriebene Empfänger 14 ist als eine Konstantstromquelle realisiert, die in Abhängigkeit der erfaßten Lichtmenge einen Ladestrom für einen Kondensator 16 und damit verbunden eine Kondensatorspannung U erzeugt, die dem Integral der Lichtmenge proportional ist. Der Kondensator 16 bildet somit eine Integrationsstufe.

Parallel zu dem Kondensator 16 liegt ein weiterer Schalter 18, der im geschlossenen Zustand den Kondensator 16 kurzschließt. Beide Schalter 18, 24 werden durch eine Auswerteschaltung 22, beispielsweise ein Mikrocontroller, angesteuert.

Die Kondensatorspannung U ist an einen Eingang 201 eines nachgeschalteten Komparators 20 gelegt, dessen Ausgang mit einem Eingang der Auswerteschaltung 22 verbunden ist. Diese legt an einen zweiten Eingang 202 des Komparators 20 erste und zweite Schwellen S1, S2 an.

Die Auswerteschaltung 22 weist Ausgänge 261, 262 für die nicht dargestellten Steuereinrichtungen nachgeschalteter Vorrichtungen auf, z.B. einen Scheibenwischer und Schiebedach.

Figur 2a zeigt den durch den Schalter 24 geschalteten normierten Senderstrom I, aufgetragen über die Zeit t.

Der Sender 12 wird während eines konstanten Zeitintervalls t1 bis t3 für eine Gesamtlichtmessung Tg eingeschaltet und während eines sich anschließenden konstanten Zeitintervalls t3 bis t5 für eine Fremdlichtmessung Tf ausgeschaltet. Während der Gesamtlichtmessung Tg werden Senderlicht und eventuelles Fremdlicht, das durch die optische Meßstrecke 13 auf den Empfänger 14 gelangen kann, erfaßt. Eine Gesamtlichtmessung Tg und eine Fremdlichtmessung Tf ergeben einen Meßzyklus M von z.B. neun Millisekunden.

Nach einer vorgegeben Anzahl von aufeinanderfolgenden Meßzyklen M wird für einen sogenannten Nachtmeßzyklus N eine Fremdlichtmessung mit einem verlängerten Zeitintervall Tf' von z.B. einer Sekunde durchgeführt. Der Nachtmeßzyklus N ist dabei geeignet, geringste Fremdlichtmengen zu detektieren, wie sie beispielsweise in der Dämmerung oder Nachts auftreten.

Figur 2b zeigt den Signalverlauf der Kondensatorspannung U aufgetragen über dieselbe Zeitachse t. Der Kondensator 16 integriert die erfaßte Gesamt- oder Fremdlichtmenge während der Zeitintervalle Tg, Tf, Tf' und wird am Ende eines jeden Zeitintervalls auf Null zurückgesetzt. Durch kurze Striche sind weiterhin zwei Schwellen S1, S2 angedeutet, wobei die erste Schwelle S1 für die Gesamtlichtmessung und die zweite Schwelle S2 für die Fremdlichtmessung verwendet wird.

Die Zeit zwischen dem Zurücksetzen der Kondensatorspannung U auf Null und dem Erreichen der ersten bzw. zweiten Schwelle S1, S2 durch die Spannung U wird als Integrationszeit für die Gesamtlichtmessung tg bzw. für die Fremdlichtmessung tf bezeichnet.

Figur 2c veranschaulicht die von der Auswerteschaltung 22 am zweiten Eingang 202 des Komparators 20 abwechselnd angelegten Schwellen S1, S2.

Die Funktionsweise der Vorrichtung nach Figur 1 wird nun anhand Figur 2 näher erläutert.

Die Zeitspanne von t1 bis t5 kennzeichnet jeweils einen Meßzyklus M bzw. Nachtmeßzyklus N. Der Spannungsverlauf des ersten Meßzyklusses M gibt beispielsweise die erfaßte Gesamtund Fremdlichtmenge am Tage wieder, während dessen der Fremdlichtanteil sehr groß werden kann. Der zweite Meßzyklus M und der Nachtmeßzyklus N geben einen für die Nacht typischen Spannungsverlauf mit geringem Fremdlichtanteil wieder.

Zum Zeitpunkt t1 eines jeden Meßzyklusses M, N beginnt das Zeitintervall der Gesamtlichtmessung Tg (beispielsweise sechs Millisekunden), in der Senderlicht und Fremdlicht gleichzeitig durch den Empfänger 14 erfaßt werden. Dafür wird der Schalter 24 im Senderstromkreis durch die Auswerteschaltung 22 geschlossen, so daß der Senderstrom I fließt und der Sender 12 Licht in die Meßstrecke auf den Empfänger 14 abstrahlt. Der Empfänger 14 erzeugt proportional zur erfaßten Gesamtlichtmenge einen Ladestrom zum Laden des Kondensators 16. Der erste Schalter 18 ist geöffnet, so daß sich über dem Kondensator 16 die Spannung U aufbaut. Die Spannung U wird dem Komparator 20 zugeführt. An den zweiten Eingang 202 des Komparators 20 wird die erste Schwelle S1 gelegt.

Ein in der Auswerteschaltung 22 vorhandener Zeitgeber wird durch diese aktiviert und inkrementiert alle zwei Mikrosekunden seinen Zählerstand.

Zum Zeitpunkt t2 erreicht die Kondensatorspannung U die erste Schwelle S1 und der Komparator 20 gibt ein Auslösesignal 21 an die Auswerteschaltung 22 ab. Daraufhin wird der Zeitgeber ausgeschaltet. Der Zählerstand des Zeitgebers entspricht der Integrationszeit der Gesamtlichtmenge tg = t2 - t1. Bei der genannten Auflösung des Zeitgebers und Dauer der Messung weist der Zählerstand einen Wert zwischen Null und 3000 Inkrementen auf, dabei entspricht eine große Gesamtlichtmenge einer kleinen Integrationszeit tg und einem geringen Zählerstand.

In der Auswerteschaltung 22 wird von der ermittelten Integrationszeit tg mittels eines Kehrwertbildners der Kehrwert gebildet und dieser, zur Vermeidung von Kommastellen, mit einem Faktor multipliziert und zwischengespeichert. Bei einem 16 Bit-Zeitgeber ist dieser Faktor günstigerweise 65535, d.h. in Hexadezimaldarstellung FFFF. Alternativ wird die ermittelte Integrationszeit tg zuerst zwischengespeichert und anschließend ausgewertet.

Zum Zeitpunkt t3 ist das in der Auswerteschaltung 22 vorgegebene Zeitintervall von sechs Millisekunden für die Gesamtlichtmessung Tg beendet. Der Schalter 24 für den Senderstromkreis wird geöffnet, so daß der Senderstrom I Null und der Sender 12 ausgeschaltet wird. Gleichzeitig wird der Schalter 18 geschlossen, um den Kondensator 16 kurzzuschließen, und wieder geöffnet, um den Kondensator 16 als Integrationsstufe für das nachfolgende Zeitintervall Tf wieder bereitzustellen. Das Öffnen und das Schließen des Schalters 18 ist in Figur 2 zeitlich nicht aufgelöst.

Die zweite Schwelle S2 wird an den Eingang 202 des Komparators 20 angelegt. Diese beträgt z.B. ein Achtel der ersten Schwelle S1.

Das Zeitintervall für die Fremdlichtmessung Tf von beispielsweise drei Millisekunden beginnt und eine der Fremdlichtmenge proportionale Kondensatorspannung U baut sich über dem Kondensator 16 auf. Der Zeitgeber wird wieder aktiviert.

Zum Zeitpunkt t4 hat die Spannung U die am Komparator 20 angelegte zweite Schwelle S2 erreicht. Der Komparator 20 gibt ein Auslösesignal 21 an die Auswerteschaltung 22, so daß der Zählerstand des Zeitgebers, der nun der Integrationszeit für die Fremdlichtmessung tf entspricht, gestoppt und erfaßt wird. Der Zählerstand kann bei der Intervalldauer Tf von drei Millisekunden und der genannten Auflösung zwischen 0 und 1500 Inkrementen liegen.

Während des zweiten Meßzyklusses M wird gemäß Figur 2b die zweite Schwelle S2 nicht erreicht. Dies geschieht dann, wenn der Fremdlichtanteil sehr klein ist. Es wird dann der maximale Integrationswert tf, hier 1500 Inkremente, durch die Auswerteschaltung 22 erfaßt.

Um bei geringen Fremdlichtmengen ebenfalls eine Integrationszeit tf bestimmen zu können, wird nach einer vorgegebenen Anzahl von Meßzyklen M, beispielsweise fünf, oder nach einer vorgegebenen Zeit, die von einer Sekunde bis eine Minute reichen kann, ein Nachtmeßzyklus N mit einem verlängertem Zeitintervall für die Fremdlichtmessung Tf' durchgeführt (beispielsweise Tf' = 1 Sekunde). In diesem verlängertem Zeitintervall Tf' erreicht auch bei großer Dunkelheit die der Fremdlichtmenge proportionale Kondensatorspannung U die zweite Schwelle S2, so daß über den Zeitgeber eine Integrationszeit tf ermittelt wird. Das Zeitintervall Tf' ist in Figur 2 nicht maßstabsgetreu dargestellt.

Die Integrationszeit für die Fremdlichtmessung tf wird wie die oben beschriebene Integrationszeit für die Gesamtlichtmessung tg ausgewertet und zwischengespeichert.

Zum Zeitpunkt t5 endet das Zeitintervall für die Fremdlichtmessung Tf, Tf' und über den Schalter 18 wird der Kondensator 16 kurzgeschlossen. Ist die Spannung U über dem Kondensator 16 auf Null zurückgesetzt, wird der Schalter 18 wieder geöffnet. Der Zeitpunkt t5 des aktuellen Meßzyklusses M, N entspricht dem Zeitpunkt t1 des nachfolgenden Meßzyklusses M, N. Das Zeitintervall für die Gesamtlichtmessung Tg schließt sich nun dem Zeitintervall für die Fremdlichtmessung Tf, Tf' wieder an.

Zur weiteren Auswertung der sich auf unterschiedliche Schwellen S1, S2 beziehenden Integrationszeiten tg, tf bzw. der daraus ermittelten Werte, werden diese, parallel zu den Messungen und unabhängig von diesen, derart umgerechnet, daß sie miteinander zu vergleichen sind. Aus den im gleichen Meßzyklus M, N ermittelten Werten wird aus der Differenz zwischen Gesamtlichtmenge und Fremdlichtmenge eine Nutzlichtmenge berechnet und ein Nutzlichtsignal erzeugt. Dies wird über den ersten Ausgang 261 der Auswerteschaltung 22 einer Steuereinrichtung für nachgeschaltete Vorrichtungen zugeführt. Bei einem optischen Regensensor korreliert das Nutzlichtsignal mit der Benetzung der Scheibe z.B. durch Niederschlag, Nebel oder Verschmutzung.

Wenn der Regensensor die Benetzung einer Kraftfahrzeugscheibe, z. B. Frontscheibe, erfaßt, dann wird üblicherweise das Nutzlichtsignal zur automatischen Ansteuerung eines Kraftfahrzeugscheibenwischers als nachgeschaltete Vorrichtung verwendet, sobald das Nutzlichtsignal z.B. eine von der Vorrichtung vorgegebene Schaltschwelle unterschreitet.

Alternativ bzw. zusätzlich wird das Nutzlichtsignal zur Ansteuerung eines Kraftfahrzeug-Schiebedaches verwendet, indem bei durch den Regensensor erkanntem Regen das Schiebedach verstellt oder geschlossen wird.

Weiterhin wird das Nutzlichtsignal zur Ansteuerung von Scheinwerfern und Nebellicht ausgewertet, so daß ab einer vorgegebenen Niederschlagsstärke oder Nebeldichte diese ein- bzw. wieder ausgeschaltet werden.

Zusätzlich wird die Fremdlichtmenge unabhängig von der Gesamtlichtmenge ausgewertet, indem das daraus abgeleitete Fremdlichtsignal über den zweiten Ausgang 262 der Steuereinrichtung oder einer weiteren Steuereinrichtung zugeführt wird, die in Abhängigkeit der Fremdlichtmenge und einer damit verbundenen Tag-Nacht-Erkennung nachgeschaltete Vorrichtungen ansteuert.

Beispielsweise wird bei Nacht- oder Tunnelfahrten Dunkelheit durch die erfindungsgemäße Vorrichtung erkannt und die Scheinwerfer, die Armaturenbeleuchtung oder dgl. eingeschaltet. Das Umschalten zwischen Auf- und Abblendlicht erfolgt ebenfalls durch die Steuereinrichtung.

Bei einer Scheinwerfer-Wisch-Waschanlage, die normalerweise gleichzeitig mit einer Scheiben-Wisch-Waschanlage aktiviert wird, führt die manuelle oder automatische Einschaltung der Wisch-Wasch-Anlage bei Helligkeit lediglich zu einer Auslösung des Scheiben-Wisch-Waschbetriebs, da die Reinigung der am Tage ausgeschalteten Scheinwerfer nicht notwendig ist.

Eine Belüftungssteuerung des Kraftfahrzeugs kann durch ein automatisches Schließen des Schiebedaches bei Erkennen von Dunkelheit in Verbindung mit einem zusätzlichen Temperatursensor realisiert werden.

Das Erkennen von Feuchtigkeit auf der Scheibe wird ebenfalls in Verbindung mit der Tag-Nacht-Erkennung ausgewertet. Zum Beispiel wird die Fremdlichtmenge zur Einstellung einer Empfindlichkeit oder einer Schaltschwelle des Regensensors oder Verstärkung des Sensorsignales herangezogen. So kann bei Dunkelheit die höchste Empfindlichkeit bzw. kleinste Schaltschwelle und bei Helligkeit die geringste Empfindlichkeit bzw. größte Schaltschwelle in der Auswerteschaltung 22 eingestellt werden. Dadurch wird ein optimales Ansprechen z.B. der automatischen Scheibenwischanlage gewährleistet.

In alternativen Ausführungsbeispielen wird für die Fremdlichtmessung im Nachtmeßzyklus N das Zeitintervall für die Fremdlichtmessung Tf beibehalten, jedoch die dem Komparator 20 zugeführte zweite Schwelle S2 erniedrigt, so daß geringe Fremdlichtmengen erfaßt werden. Über verschiedene Widerstandsschaltungen in der Auswerteschaltung 22 können optimale Schwellwertverhältnisse der zweiten Schwelle S2 von z.B. 2, 8 oder 16 realisiert werden.

Ferner ist eine Erniedrigung der Schwelle S2 zusammen mit einer Verlängerung des Zeitintervalls Tf' realisierbar.

## Patentansprüche

1. Vorrichtung zum Erfassen einer Benetzung einer Scheibe und einer Lichtmenge mit einem Regensensor, der eine Meßschaltung mit einem lichtabstrahlenden Sender (12), einen auf das abgestrahlte Licht und Fremdlicht ansprechenden, ein Sensorsignal abgebenden Empfänger (14) sowie eine Auswerteschaltung (22) aufweist, wobei die Meßschaltung eine Integrationsstufe (16) zum Erfassen der Lichtmenge des auf den Empfänger (14) fallenden Lichts und eine Komparatorstufe (K) aufweist, mit der ein Auslösesignal (21) an die Auswerteschaltung (22) abgebbar ist, wenn die ab einem bestimmten Zeitpunkt (T1, T3) integrierte Lichtmenge, eine Schwelle (S1, S2) überschreitet, und wobei die Messung der aus dem Licht des Senders (12) und eventuellem Fremdlicht bestehenden Gesamtlichtmenge und der bei abgeschaltetem Sender (12) erfaßten Fremdlichtmenge in gesonderten Zeitintervallen (Tg, Tf, Tf') erfolgt, **dadurch gekennzeichnet, daß** zur Erfassung des Fremdlichts und dessen Auswertung hinsichtlich einer Tag-Nacht-Erkennung nach einer vorgegebenen Anzahl von Fremdlichtmessungen während konstanter kurzer Zeitintervalle (Tf) eine Fremdlichtmessung über ein längeres Zeitintervall (Tf') oder mit einer kleineren Schwelle (S2) erfolgt.

2. Vorrichtung nach Anspruch 1, **dadurch gekennzeichnet, daß** die Länge der Zeitintervalle (Tg, Tf, Tf') durch die Auswerteschaltung (22) festgelegt ist.

3. Vorrichtung nach Anspruch 1, **dadurch gekennzeichnet, daß** die Dauer des verlängerten Zeitintervalls für die Fremdlichtmessung (Tf') bei zehn Millisekunden bis zehn Sekunden liegt.

4. Vorrichtung nach Anspruch 1, **dadurch gekennzeichnet, daß** die vorgebbare Zeitdauer zwischen einer Sekunde und einer Minute liegt.

5. Vorrichtung nach Anspruch 1, **dadurch gekennzeichnet, daß** eine zweite Schwelle (S2) für die Fremdlichtmessung kleiner als eine erste Schwelle (S1) für die Gesamtlichtmessung ist, vorzugsweise um den Faktor acht.

6. Vorrichtung nach Anspruch 1, **dadurch gekennzeichnet, daß** die zweite Schwelle (S2) für die Fremdlichtmessung variabel oder auf unterschiedliche Werte einstellbar ist.

7. Vorrichtung nach Anspruch 1 bis 6, **dadurch gekennzeichnet, daß** sie zur Ansteuerung eines Scheibenwischers und weiterer Einrichtungen zu verwenden ist, insbesondere Scheinwerfer, Scheinwerfer-Wisch-Waschanlage, Armaturenbeleuchtung, Schiebedach oder Fenster.

8. Vorrichtung nach Anspruch 7, **dadurch gekennzeichnet, daß** in Abhängigkeit der Fremdlichtmenge eine Verstärkung des Sensorsignales, eine Empfindlichkeit oder eine Schaltschwelle des Regensensors in der Auswerteschaltung (22) einstellbar ist.

## Claims

1. Apparatus for detecting wetting of a window pane and a light quantity with the aid of a rain sensor which has a measuring circuit with a light-emitting transmitter (12), a receiver (14), which responds to the emitted light and extraneous light and outputs a sensor signal, and an evaluation circuit (2), the measuring circuit having an integration stage (16) for detecting the light quantity of the light falling on the receiver (14) and a comparator stage (K) with the aid of which a tripping signal (21) can be output to the evaluation circuit (22) when the light quantity, integrated starting from a specific instant (T1, T3), overshoots a threshold (S1, S2), and the measurement of the total light quantity, comprised of light from the transmitter (12) and possible extraneous light, and of the extraneous light quantity detected with the transmitter (12) switched off being performed in separate time intervals (Tg, Tf, Tf'), **characterized in that** extraneous light is measured over a relatively long time interval (Tf') or with a relatively low threshold (S2) in order to detect the extraneous light and evaluate it with regard to a day/night detection after a prescribed number of extraneous light measurements during a constant short time interval (Tf).

2. Device according to Claim 1, **characterized in that** the length of the time intervals (Tg, Tf, Tf') is fixed by the evaluation circuit (22).

3. Device according to Claim 1, **characterized in that** the duration of the lengthened time interval for the extraneous light measurement (Tf') is from ten milliseconds to ten seconds.

4. Device according to Claim 1, **characterized in that** the prescribable time duration is between one second and one minute.

5. Device according to Claim 1, **characterized in that** a second threshold (S2) for the extraneous light measurement is lower than a first threshold (S1) for the total light measurement, preferably by a factor of eight.

6. Device according to Claim 1, **characterized in that** the second threshold (S2) for the extraneous light measurement is variable, or can be set to different values.

7. Device according to Claims 1 to 6, **characterized in that** it is to be used to drive a screen wiper and further facilities, in particular headlamps, a headlamp wipe-wash system, dashboard lighting, a sliding roof or windows.

8. Device according to Claim 7, **characterized in that** an amplification of the sensor signals, a sensitivity or an operating threshold of the rain sensor can be set in the evaluation circuit (22) as a function of the extraneous light quantity.

## Revendications

1. Dispositif pour détecter le mouillage d'une vitre et une quantité de lumière à l'aide d'un capteur de pluie, comportant un circuit de mesure avec un émetteur (12) émettant un faisceau lumineux, un récepteur (14) fournissant un signal de capteur correspondant à la lumière émise et à la lumière étrangère ainsi qu'un circuit d'exploitation (22),
le circuit de mesure comportant un étage d'intégration (16) pour saisir la quantité de lumière incidente dans le récepteur (14) et un étage de comparaison (K) qui fournit un signal de déclenchement (21) au circuit d'exploitation (22) si à partir d'un certain instant (T1, T3), la quantité de lumière intégrée dépasse un seuil (S1, S2), en effectuant la mesure de la quantité globale de lumière provenant de la lumière de l'émetteur (12) et de l'éventuelle lumière étrangère, et la mesure de la quantité de lumière étrangère détectée lorsque l'émetteur (12) est coupé, dans des intervalles de temps différents (Tg, Tf, Tf),
**caractérisé en ce que**
pour saisir la lumière étrangère et l'exploiter pour distinguer entre le jour et la nuit, après un nombre prédéterminé de mesures de la lumière étrangère, pendant des intervalles de temps courts, constants (Tf) on mesure la lumière étrangère dans un intervalle de temps plus long (Tf) ou avec un seuil (S2) plus petit.

2. Dispositif selon la revendication 1,
**caractérisé en ce que**
la longueur des intervalles de temps (Tg, Tf, Tf') est fixée par le circuit d'exploitation (22).

3. Dispositif selon la revendication 1,
**caractérisé en ce que**
la durée de l'intervalle de temps long pour la mesure de la lumière étrangère (Tf) est comprise entre dix millisecondes et dix secondes.

4. Dispositif selon la revendication 1,
**caractérisé en ce que**
la durée prédéterminée se situe entre une seconde et une minute.

5. Dispositif selon la revendication 1,
**caractérisé en ce qu'**
un second seuil (S2) pour mesurer la lumière étrangère est inférieur à un premier seuil (S1) pour mesurer la lumière globale, correspondant de préférence à un facteur huit.

6. Dispositif selon la revendication 1,
**caractérisé en ce que**
le second seuil (S2) pour la mesure de la lumière étrangère est variable ou se règle sur des valeurs différentes.

7. Dispositif selon l'une quelconque des revendications 1 à 6,
**caractérisé en ce qu'**
il est applicable à la commande d'un essuie-glace et d'autres installations, notamment de projecteurs, d'installations d'essuie-glace de projecteurs, de l'éclairage des tableaux de bord, de la commande du toit coulissant ou des vitres.

8. Dispositif selon la revendication 7,
**caractérisé en ce qu'**
on peut en fonction de la quantité de lumière étrangère amplifier le signal du capteur, régler la sensibilité ou le seuil de commutation du capteur de pluie dans le circuit d'exploitation (22).
